(19) **Europäisches Patentamt / European Patent Office / Office européen des brevets**

(11) **EP 4 112 498 B1**

(12) **EUROPEAN PATENT SPECIFICATION**

(45) Date of publication and mention
of the grant of the patent:
**01.04.2026  Bulletin 2026/14**

(21) Application number: **20922289.2**

(22) Date of filing: **30.11.2020**

(51) International Patent Classification (IPC):
**B65F 5/00** *(2006.01)*     **G05B 23/02** *(2006.01)*
**B66C 13/48** *(2006.01)*     **G06N 20/10** *(2019.01)*
**G05B 19/042** *(2006.01)*

(52) Cooperative Patent Classification (CPC):
**G05B 19/042; B66C 13/48; G06N 20/10**

(86) International application number:
**PCT/JP2020/044442**

(87) International publication number:
**WO 2021/171720 (02.09.2021 Gazette 2021/35)**

(54) **INFORMATION PROCESSING DEVICE, CONTROL SYSTEM, CONTROL VARIABLE DETERMINATION METHOD, AND CONTROL VARIABLE DETERMINATION PROGRAM**

INFORMATIONSVERARBEITUNGSGERÄT, STEUERUNGSSYSTEM, VERFAHREN ZUR BESTIMMUNG VON STEUERUNGSVARIABLEN UND PROGRAMM ZUR BESTIMMUNG VON STEUERUNGSVARIABLEN

DISPOSITIF DE TRAITEMENT D'INFORMATIONS, SYSTEME DE COMMANDE, PROCÉDÉ DE DÉTERMINATION DE VARIABLE DE COMMANDE ET PROGRAMME DE DÉTERMINATION DE VARIABLE DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.02.2020  JP 2020033904**

(43) Date of publication of application:
**04.01.2023  Bulletin 2023/01**

(73) Proprietors:
• **Kanadevia Corporation**
  **Osaka-shi, Osaka 559-8559 (JP)**
• **National University corporation**
  **Nara Institute of Science and Technology**
  **Ikoma-shi**
  **Nara 630-0192 (JP)**

(72) Inventors:
• **KAWABATA, Kaoru**
  **Osaka-shi, Osaka 559-8559 (JP)**
• **HIRABAYASHI, Terushi**
  **Osaka-shi, Osaka 559-8559 (JP)**
• **ONUKI, Yukio**
  **Osaka-shi, Osaka 559-8559 (JP)**
• **DAI, Yingda**
  **Osaka-shi, Osaka 559-8559 (JP)**
• **MATSUBARA, Takamitsu**
  **Ikoma-shi, Nara 630-0192 (JP)**
• **SASAKI, Hikaru**
  **Ikoma-shi, Nara 630-0192 (JP)**

(74) Representative: **Grünecker Patent- und
Rechtsanwälte
PartG mbB
Leopoldstraße 4
80802 München (DE)**

(56) References cited:
**EP-A1- 3 470 735      WO-A1-2017/188328
WO-A1-2019/244474    JP-A- 2003 176 093
JP-A- H0 592 891      JP-A- H0 592 891
JP-A- H1 121 077      US-A1- 2017 205 809
US-B1- 6 625 500**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to an information processing device, etc. that can be used for automatic control over a crane that transports waste.

Background Art

Waste having been brought in a waste disposal plant is temporarily stored in a storage facility called pit, and then fed into an incinerator to be incinerated. In typical waste disposal plants, a crane is used to transfer waste stored in a pit. Basically, the crane is operated manually by an operator. At the same time, an attempt to automate the control over the crane has been being made.

For example, Patent Literature 1 below discloses a technique of quantifying the degree of mixing of waste to automatically control a crane in accordance with the quantified degree of mixing of waste. In the technique disclosed in Patent Literature 1, the quantification of the degree of mixing is performed in accordance with the number of mixings, and the automatic control is achieved by generating a crane control instruction in which specified are a position where waste is grasped and a position where the waste having been grasped and lifted is dropped.

JP H05 92891 A relates to a grab quantity control method for unloader. US 6 625 500 B1 relates to a method for self-optimizing a performance of an object comprising: performing a plurality of computerized automatic experimental cycles on a plurality of selected control variables; each experimental cycle comprising computer-planning a designed test matrix, executing the experimental cycle according to the designed test matrix to collect test results, and computer-analyzing, in real time, the test results to determine at least one way to combine optimally the selected control variables for optimizing or improving the performance of the object; and in at least one of the experimental cycles after the first cycle computer-planning a new designed test matrix to minimize or remove at least one expected two-variable interaction effect from main effect of at least one designated control variable; a main effect being a computer-analyzed individual effect of a single control variable on the performance of the object, while an interaction effect being a computer-analyzed combined effect of a plurality of control variables on the performance.

US 2017/205809 A1 relates to an industrial system comprising: a control system configured to control operation of an industrial process by instructing an automation component to implement a manipulated variable setpoint, wherein the control system comprises: a process model configured to model operation of the industrial process; control optimization circuitry configured to determine the manipulated variable setpoint based at least in part on the process model, a control objective function, and constraints on the industrial process, wherein the control objective function comprises a tuning parameter configured to describe weighting between aspects of the industrial process affected by the manipulated variable setpoint; and tuning optimization circuitry configured to determine the tuning parameter based at least in part on a tuning objective function, wherein the tuning objective function is determined based at least in part on a closed form solution to an augmented version of the control objective function that comprises the constraints as soft constraints.

EP 3 470 735 A1 relates to a crane control device that controls an action of a crane for transferring waste in a waste pit, said crane control device comprising: a location determining section that determines, based on a height and a degree of mixing of waste in each of a plurality of sections into which a waste storing section in the waste pit is divided, a section to be set as a waste grabbing location when the crane is controlled to execute predetermined work including a waste grabbing action; and a crane control section that controls the crane to execute the waste grabbing action at the section which has been determined by the location determining section when the crane is controlled to execute the predetermined work.

Citation List

[Patent Literature]

[Patent Literature 1]
Japanese Patent Application Publication, Tokukai, No. 2010-275064

Summary of Invention

Technical Problem

However, waste stored in a waste pit is a mixture of different kinds of waste diverse in material and state, and the characteristic thereof is not constant. Accordingly, when the technique disclosed in Patent Literature 1 is applied to waste mixing performed in an actual waste pit, it is assumed that an intended mixing cannot be performed.

For example, simply specifying a position where waste is grasped can result in grasping of a large amount of waste and can result in grasping of only a small amount of waste, depending on the characteristic of waste located at the position. Further, when the graspable amount of waste is not stable, a difference between an actual amount of waste transferred and an intended amount of waste transferred cumulatively widens for the duration of an automatic control over a crane. This eventually could cause a failure to obtain an intended mixing effect. Even when an intended amount of waste is successfully grasped, variation in characteristic of the grasped waste may cause a failure to obtain an intended mixing effect. Such failures are involved not only in mixing, but also in control in any work performed by a crane such as lifting, scattering, and dropping.

As above, in a case of automatically control a crane that transports waste that is not constant in characteristic, it is necessary to determine a control variable of the crane to obtain a desired control result. However, it has been impossible to determine such a control variable by using conventional techniques. An object of an aspect of the present invention is to provide an information processing device, etc. that makes it possible to determine a control variable of a crane that transports waste that is likely to yield a desired control result.

Solution to Problem

In order to the above problem to be solved, an information processing device in accordance with an aspect of the present invention is defined in claim 1.

Further, in order for the above problem to be solved, a control variable determination method, in accordance with an aspect of the present invention is defined in claim 5.

Advantageous Effects of Invention

An aspect of the present invention enables determination of a control variable that is likely to yield a desired control result.

Brief Description of Drawings

Fig. 1 is a block diagram of an example of the configuration of the main sections of an information processing device in accordance with Embodiment 1 of the present invention.
Fig. 2 is a schematic diagram of a control system including the information processing device.
Fig. 3 is a flowchart of an example of processing for determining a control variable of a crane.
Fig. 4 is a graph illustrating a function formed in accordance with the mean and the variance of a predictive distribution calculated by a Gaussian process regression and a function formed in accordance with the mean and the variance of a predictive distribution calculated by a robust Gaussian process regression.
Fig. 5 is a block diagram of an example of the configuration of the main sections of an information processing device in accordance with Embodiment 2 of the present invention.
Fig. 6 is a flowchart of an example of processing for optimizing parameters of a kernel function.
Fig. 7 is a chart showing the results of experiments to verify the effects of the information processing devices.
Fig. 8 is a chart illustrating a task kernel obtained at the end of optimizations in Experiments 10 to 12.

Description of Embodiments

Embodiment 1

(System overview)

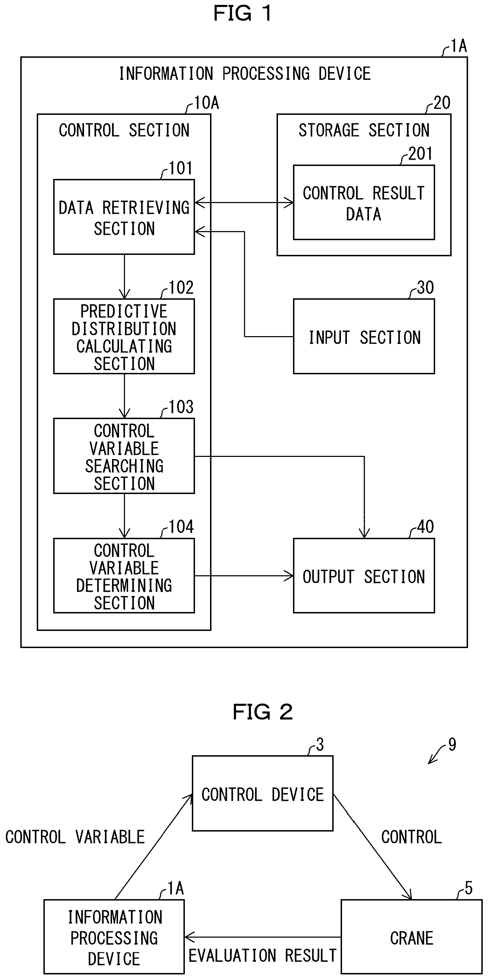

The following description will discuss an overview of a control system 9 in accordance with Embodiment 1 of the present invention in accordance with Fig. 2. Fig. 2 is a schematic diagram of the control system 9. As illustrated, the control system 9 includes: an information processing device 1A; a control device 3; and a crane 5.

The control system 9 is a system for controlling, via the control device 3, actions to be performed by the crane 5. The information processing device 1A calculates a control variable that specifies details of the control performed by the control device 3. The information processing device 1A calculates an appropriate control variable so that an appropriate automatic control over the crane 5 via the control device 3 is achieved.

The crane 5 is a crane used to transport waste, for example, a crane used in a waste disposal plant or the like. The crane 5 may include, for example, a bucket having a plurality of claws for grasping waste, an opening and closing mechanism for opening and closing the claws of the bucket, a lifting and lowering mechanism for lifting and lowering the bucket, a moving mechanism for horizontally moving the bucket. In this case, the control device 3 can cause the crane 5 to perform an action such as waste mixing, by controlling the opening and closing mechanism, the lifting and lowering mechanism, and the moving mechanism.

In causing the information processing device 1A to calculate an optimum control variable, what made first in the control system 9 are a setting of a task to be performed by the crane 5 and a setting of a control variable to be used when the crane 5 is caused to perform the task.

Assume, for example, that the crane 5 is caused to perform a task of mixing waste by lifting the waste having been grasped by the bucket, and then opening and closing the bucket while horizontally moving the bucket to scatter the waste along the movement path of the bucket. In this case, a control variable to be set may be a control variable for enabling the waster to be evenly scattered, i.e., a control variable that makes it possible to specify the timings of opening and closing controls over the bucket.

In the above case, it is possible to scatter the waste by repeating a series of controls which is such that, after the start of an opening action to open the bucket grasping the waste, a closing action is started at the time of dropping of a predetermined amount of waste from the bucket, and the opening action is started again after the elapse of predetermined time after the start of the closing action. Therefore, the above predetermined amount and the above predetermined time may be used as the control variables.

Alternatively, the control variables may be, for example, the weight of waste that drops during a period from the start of an opening action to open the bucket to the start of a closing action to close the bucket, the rate of change in the amount of remaining waste or the weight of waste in the bucket during the period, the length of the period, and the moving distance of the bucket during the period. Alternatively, as an example, when a closing action shall be automatically started after an opening action is ended, the above period may be used as a period from the start of the opening action to the end of the closing action. In addition, the time to perform an opening action, the time to perform a closing action, and the like may be used as the control variables.

Data to be used when the control device 3 controls the crane 5 by using the above control variables is not limited to any particular data. For example, besides the weight of waste having been grasped, the water content, type, the degree of mixing, information indicating a surface condition (e.g., a shot image of the surface of waste), etc. may be used in controlling the crane 5. Such kinds of data are not limited to any particular data format, but may be numerical data, or may be image data, or the like.

After the control variables are set, the crane 5 is controlled via the control device 3 to perform a set task. The result of the control is then evaluated in terms of appropriateness, and the result of the evaluation is inputted to the information processing device 1A together with the control variables used in the control. For example, in a case where the task is to mix waste by evenly scattering the waste, the evaluation may be such that a higher evaluation value is given when the waste is scattered more evenly along the movement path of the bucket.

The information processing device 1A optimizes control variables in accordance with the inputted control variables and the evaluation value, and the control device 3 uses the optimized control variables to cause the crane 5 to perform the task again. By repeating such processing, the information processing device 1A can determine control variables that are likely to yield a desired control result. This makes it possible to achieve an appropriate automatic control over the crane 5 via the control device 3.

(Configuration of main sections)

The following description will discuss a configuration of the information processing device 1A in accordance with Fig. 1. Fig. 1 is a block diagram of an example of the configuration of the main sections of the information processing device 1A. Note that the following description will discuss an example in which the information processing device 1A determines, by Bayesian optimization (hereinafter referred to as BO), a control variable that is likely to yield a desired control result, i.e., an example of optimization of a control variable by BO.

As illustrated, the information processing device 1A includes: a control section 10A that has control over all sections of the information processing device 1A; a storage section 20 that stores various kinds of data to be used by the information processing device 1A; an input section 30 that accepts an input to the information processing device 1A; and an output section 40 via which the information processing device 1A outputs data.

The control section 10A includes: a data retrieving section 101; a predictive distribution calculating section 102; a control variable searching section 103; and a control variable determining section 104. The storage section 20 further stores control result data 201.

The data retrieving section 101 retrieves training data to be used for optimization by BO. Specifically, a control variable having been used to control the crane 5 and an evaluation value of the control result of the control are stored as the control result data 201, and the data retrieving section 101 retrieves this control result data 201 as the training data.

In a case where the control result data 201 contains N control variables, these control variables are expressed as

follows.

$$\mathbf{\Theta} = \{\theta_n\}_{n=1}^{N}$$

The control variables are expressed by this expression.

The evaluation values of the control variables are expressed as follows.

$$\mathbf{Y} = \{y_n\}_{n=1}^{N}$$

The evaluation values are expressed by this expression.

The predictive distribution calculating section 102 calculates a predictive distribution of a function indicating the relationship between the control variables and the control result, by using the control result data 201 retrieved by the data retrieving section 101. Hereinafter, this function is referred to as an evaluation function $f(\theta)$. Further, when new data is added to the control result data 201, the predictive distribution calculating section 102 updates the predictive distribution such that the data is reflected.

Assume that the relationship between the control variables and the control result is expressed by the following expression with the use of the Gaussian noise $\varepsilon_n \sim N(0,\beta)$.

$$y_n = f(\theta_n) + \varepsilon_n$$

Under the above assumption, a Gaussian process-based predictive distribution of the evaluation function is given as follows.

$$p(f(\theta) \mid \theta) = \mathcal{N}(f(\theta) \mid \mu(\theta), \sigma(\theta)) \tag{1}$$

$$\mu(\theta) = \mathrm{k}_*(\mathbf{K_\Theta} + \beta\mathbf{I})^{-1}\mathbf{f} \tag{2}$$

$$\sigma(\theta) = \mathrm{k}_* - \mathbf{k}_{\Theta,*}^{T}(\mathbf{K_\Theta} + \beta\mathbf{I})^{-1}\mathbf{k}_{\Theta,*} \tag{3}$$

In the above expressions, $\mathrm{k}_* = k(\theta,\theta)$, and $K_\Theta$ is a Gram matrix given by $[K_\Theta]_{i,j} = k(\theta_i,\theta_j)$. In addition,

$$\mathbf{f} = \{f(\theta_n)\}_{n=1}^{N}$$

$\mathrm{k}_{\Theta,*}$ is a column vector given by $[\mathrm{k}_{\Theta,*}]_i = k(\theta_i,\theta)$, and $k(.\,,.)$ is a kernel function. In this specification, the parameter of the kernel function is $\alpha_k$.

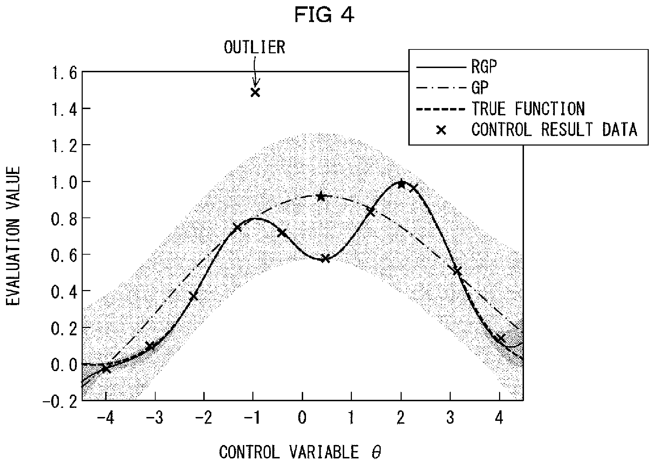

The mean function $\mu(\theta)$ represents the mean value of the evaluation function predicted from the control result data 201. The variance function $\sigma(\theta)$ is the variance of the evaluation function predicted from the control result data 201. The function $\sigma(\theta)$ represents the uncertainty of prediction, and the value thereof tends to be large in a region which is short of the control result data 201. Note that a light-grey portion in Fig. 4 (which will be described later) represents the variance $\sigma$. A larger $\sigma$ makes the grey portion wider. This tells that the prediction is uncertain. That is to say, control result data that is necessary to increase the certainty of the prediction is insufficient. As is clear from Expression (3), the kernel function included in the variance function $\sigma(\theta)$ and the parameter $\alpha_k$ of the kernel function affect the calculation of a predictive distribution. In calculating a predictive distribution, the optimization of the parameter $\alpha_k$ is performed. The details of this optimization will be described later.

The control variable searching section 103 searches for a candidate for an optimum control variable (candidate control variable) to determine the optimum control variable. Specifically, the control variable searching section 103 uses the mean function $\mu(\theta)$ and the variance function $\sigma(\theta)$ to search for a control variable that causes an acquisition function $a(\theta)$ below to reach a maximum. A control variable detected in this search is used as the candidate for the optimum control variable. This search is based on an upper confidence bound (UCB) policy. Note that $\kappa$ in Expression (5) is a parameter for adjusting a trade-off between exploitation and exploration. It is possible to use another method to search for a new control variable, as a matter of course. For example, a probability of improvement (PI) policy or an expected improvement (EI) policy may be used to search for the candidate for the optimum control variable.

In a case of determining, as the optimum control variable, a control variable that causes the evaluation function to reach a minimum value (e.g., in a case of using, as the evaluation value, the time required for a task to be completed, the task being preferably completed in a short time), a control variable that causes the acquisition function a(θ) to reach a minimum may be searched for.

$$\theta \leftarrow \underset{\theta}{\arg\max} \, a(\theta) \qquad\qquad (4)$$

$$a(\theta) = \mu(\theta) + \kappa\sigma(\theta) \qquad\qquad (5)$$

A candidate for the optimum control variable detected by the control variable searching section 103 is used to control the crane 5. A control result (more specifically, an evaluation value of the control result) is then obtained, and inputted to the information processing device 1A. The inputted data (the candidate for the optimum control variable and the evaluation value) is added to the control result data 201. After that, an update to a predictive distribution is made by using the control result data 201 to which the data has been added. Note that the calculation of the evaluation value may be performed by the information processing device 1A, or may be performed by another device or by a user.

The control variable determining section 104 determines an optimum value of the control variable in accordance with an evaluation function formed in accordance with the predictive distribution to which the update has been made by the predictive distribution calculating section 102. An optimum value of a control variable is a value that is regarded as being optimum by making an inference from the predictive distribution to which the update has been made, and can be also a solution to a control variable optimization computation performed by the information processing device 1A. Setting, to this optimum value, the value of a control variable used in controlling the crane 5 is likely to yield the best control result.

A method for determining the optimum value is not limited to any particular method, but various methods are applicable. For example, in a case where a candidate, detected by the control variable searching section 103, for a control variable has already been evaluated, the control variable determining section 104 may determine that the candidate is an optimum control variable. This is because, in a case where a candidate, detected by the control variable searching section 103, for an optimum control variable has already been evaluated, the control variable is highly likely to correspond to a maximum value (or a minimum value) of an evaluation function, not to an extreme value of the evaluation function.

As above, the information processing device 1A includes the predictive distribution calculating section 102 that calculates a predictive distribution of an evaluation function by using the control result data 201, and the control variable searching section 103 that searches for, in accordance with the predictive distribution, a candidate control variable that is a candidate for an optimum value of the control variable. Further, the predictive distribution calculating section 102 updates the predictive distribution by using a new candidate control variable detected by the control variable searching section 103 and a control result of control over the crane 5 by using the candidate control variable. The information processing device 1A also includes the control variable determining section 104 that determines an optimum value of the control variable by using a function formed in accordance with the predictive distribution to which the update has been made. More specifically, the function is formed in accordance with the mean and the variance of the predictive distribution to which the update has been made (Expression (5)).

As described in the section "Technical Problem", the characteristic of waste stored in a waste pit is not constant. It is therefore difficult to formulate the relationship between the control variable and the control result regarding the crane 5.

To deal with the problem, according to the above-described configuration, an optimum value of the control variable is determined in accordance with a predictive distribution of a function that brings the control variable and the control result into correspondence with each other. This makes it possible to determine a control variable of a crane that transports waste whose characteristic is not constant, the control variable being likely to yield a desired control result.

According to the above-described configuration, a candidate control variable is searched for in accordance with a predictive distribution. A candidate control variable having been detected is therefore data useful in appropriately updating the predictive distribution even if the detected candidate control variable is not an optimum control variable. Accordingly, the above-described configuration makes it possible to keep the number of attempts smaller than, for example, a configuration in which an attempt to select at random a control variable of the crane 5 and observe the control result of control over the crane 5 is repeated for determining an optimum control variable.

(Processing flow)

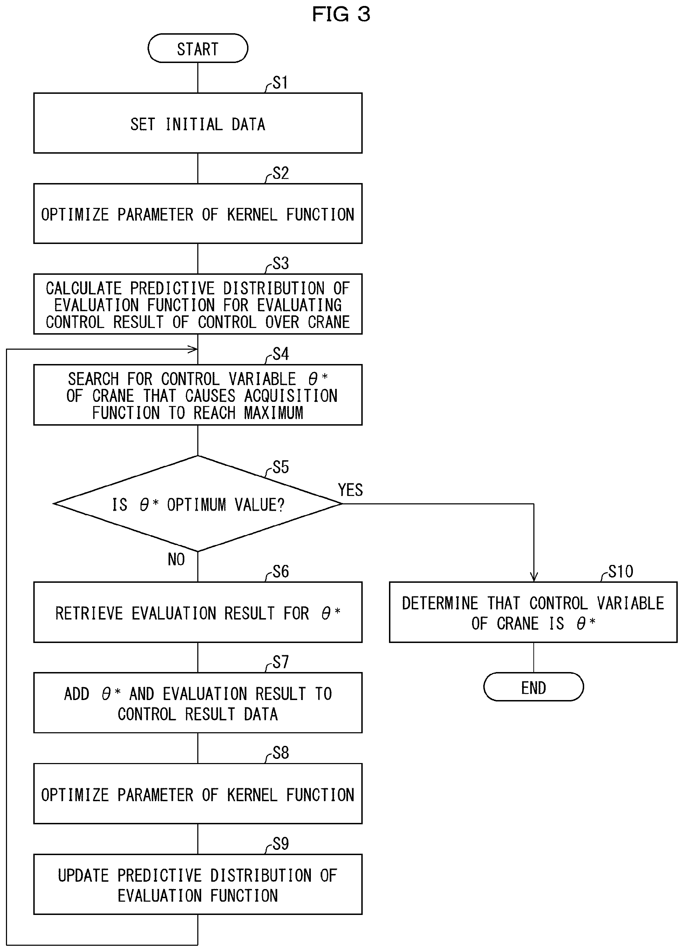

The flow of processing whereby the information processing device 1A determines a control variable of the crane 5 (control variable determination method) will be described in accordance with Fig. 3. Fig. 3 is a flowchart of an example of processing for determining a control variable of the crane 5.

In S1, the data retrieving section 101 reads the control result data 201 stored in the storage section 20, and sets an initial data to the read data. In this stage, the control result data 201 only needs to contain a control result based on at least one attempt (a single control variable and an evaluation value obtained by evaluating a result of control performed by using the single control variable).

In S2, the predictive distribution calculating section 102 optimizes the parameter of a kernel function. As described above, the parameter of the kernel function is $\alpha_k$. A method for the optimization is not limited to any particular method. For example, optimization approaches applied in typical BOs can also be applied.

In S3 (predictive distribution calculating step), the predictive distribution calculating section 102 uses the initial data set in S1 and the parameter of the kernel function optimized in S2 to calculate a predictive distribution of an evaluation function for evaluating the control result of control over the crane 5. As described above, this predictive distribution is expressed by Expressions (1) to (3).

In S4 (control variable searching step), the control variable searching section 103 searches for a control variable $\theta^*$ of the crane 5 that causes an acquisition function to reach a maximum. The control variable $\theta^*$ is a candidate for an optimum value of the control variable $\theta$. As described above, this operation is expressed by Expressions (4) and (5).

In S5, the control variable determining section 104 judges whether the control variable $\theta^*$ specified in S4 is an optimum value. A method for judging whether the control variable $\theta^*$ is an optimum value is not limited to any particular method. For example, if the control variable $\theta^*$ detected in the last S4 agrees with the control variable detected before the last S4, then the control variable determining section 104 may judge that the control variable $\theta^*$ is an optimum value, and if the control variable $\theta^*$ detected in the last S4 does not agree with the control variable detected before the last S4, then the control variable determining section 104 may judge that the control variable $\theta^*$ is not an optimum value. Note that the control variable detected before the last S4 refers to a control variable that is contained in the control result data 201 and that has been used for control over the crane 5 so that the evaluation value of the control has been calculated.

If the control variable $\theta^*$ is judged to be an optimum value in S5 ("YES" in S5), then the processing proceeds to S10. In S10 (control variable determining step), the control variable determining section 104 determines that an optimum value of the control variable of the crane 5 is $\theta^*$. Thus, the processing of Fig. 3 ends. Optionally, the control variable determining section 104 may cause the output section 40 to output the determined $\theta^*$ in S10.

Conversely, if the control variable $\theta^*$ is not judged to be an optimum value in S5 ("NO" in S5), then the control variable determining section 104 provides notification to a user of the information processing device 1A by, for example, causing the output section 40 to output this control variable $\theta^*$. On the basis of this notification, the user causes the control device 3 to control the crane 5 according to this control variable $\theta^*$, and observes and evaluates the result of the control. A method for the evaluation is not limited to any particular method. For example, an error between an ideal control result and an actual control result may be calculated and used as the evaluation value. The evaluation result is inputted to the information processing device 1A via the input section 30.

In S6, the data retrieving section 101 retrieves the evaluation result having been inputted as above. In S7, the data retrieving section 101 then brings the evaluation result retrieved in S6 into correspondence with the control variable $\theta^*$ determined in the last S4, and adds the evaluation result and the control variable $\theta^*$ to the control result data 201.

In S8, the predictive distribution calculating section 102 uses the control result data 201 to which the evaluation result and the control variable $\theta^*$ have been added in S7 to optimize the parameter of the kernel function. In S9 (updating step), the predictive distribution calculating section 102 uses the control result data 201 to which the evaluation result and the control variable $\theta^*$ have been added in S7 and the parameter of the kernel function optimized in S8 to calculate a predictive distribution of an evaluation function. The processing then returns to S4, and a search for the control variable is performed by the control variable searching section 103. In this manner, the addition of the control variable and the update of the predictive distribution are repeated. This makes it possible to determine a control variable that is likely to yield a desired control result.

Embodiment 2

The following description will discuss another embodiment of the present invention. For the convenience of description, a member having the same function as the member already described in Embodiment 1 has is assigned with the same reference sign, and the description thereof is omitted.

(Device configuration)

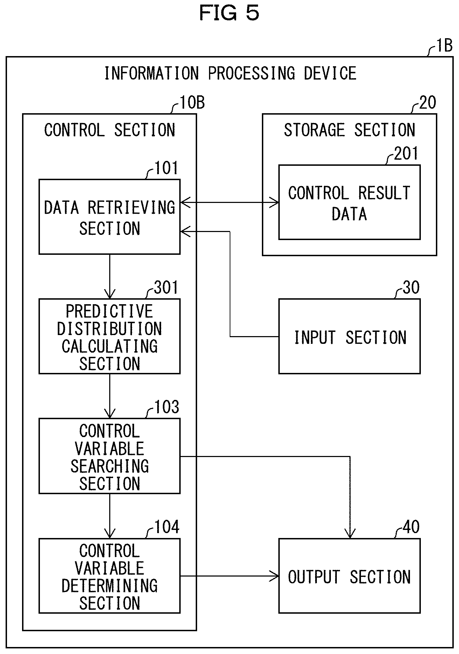

The configuration of an information processing device 1B in accordance with Embodiment 2 will be described in accordance with Fig. 5. Fig. 5 is a block diagram of an example of the configuration of the main sections of the information processing device 1B. As illustrated, the information processing device 1B includes a control section 10B that has control over all sections of the information processing device 1B. A difference between the control section 10B and the control section 10A of the information processing device 1A illustrated in Fig. 1 is that the control section 10B includes a predictive distribution calculating section 301 instead of the predictive distribution calculating section 102.

Like the predictive distribution calculating section 102, the predictive distribution calculating section 301 calculates and updates a predictive distribution by using the control result data 201. However, a method for the calculation and the update differ from that used in the predictive distribution calculating section 102, as will be described below.

The predictive distribution calculating section 301 calculates or updates a predictive distribution by using the degree of contribution based on the degree of reliability of each of the pieces of control result data, as the contribution of that control result data in the calculation of the predictive distribution. Accordingly, even when control result data whose reliability is low is contained to be used for the calculation or the update of the predictive distribution, it is possible for such control result data to have relatively small influence on the predictive distribution. This enables speedy determination of a reasonable control variable.

Note that the degree of reliability of control result data is an index of reasonableness of the control result data in the whole predictive distribution. For example, if the removal of certain control result data from pieces of control result data makes a predictive distribution of the remaining pieces of control result data close to a Gaussian distribution, the removed control result data is highly likely to be an outlier that deviates from a true function (evaluation function), and the degree of reliability thereof is considered low. Conversely, if not removing certain control result data from pieces of control result data makes a predictive distribution closer to a Gaussian distribution than the removal of the certain control result data does, the degree of reliability of the certain control result data is considered high.

The predictive distribution calculating section 102 in Embodiment 1 calculates and updates a predictive distribution by a Gaussian process regression, whereas the predictive distribution calculating section 301 in Embodiment 2 calculates and updates a predictive distribution by a robust Gaussian process regression obtained by making a Gaussian process regression robust. Making a Gaussian process regression robust makes it possible to calculate and update a predictive distribution with stability even when the control result data contains an outlier.

An example of the comparison between the robust Gaussian process regression and the Gaussian process regression is illustrated in Fig. 4. Fig. 4 is a graph illustrating a function formed in accordance with the mean and the variance of a predictive distribution calculated by a Gaussian process (GP) regression and a function formed in accordance with the mean and the variance of a predictive distribution calculated by a robust Gaussian process (RGP) regression.

Both of these functions are formed in accordance with the same control result data. However, a function is formed by using all of the pieces of control result data in a GP, whereas, in an RGP, a function is formed with the influence of an outlier (such as one illustrated) being reduced or removed.

In a case where control result data containing an outlier is used to calculate a predictive distribution by a Gaussian process regression, a predictive distribution that does not agree with a true function (evaluation function) can be calculated under the influence of the outlier. Even in a case of applying a GP, using many pieces of control result data makes it possible to make the predictive distribution close to the true function. However, in a case of Fig. 4, in which illustrated are the functions formed in accordance with the same number of pieces of control result data, the result is that the function formed by an RGP agrees very well with the true function, whereas the function formed by a GP has many portions that deviate from the true function.

Further, although the function formed by a GP has a maximum value at $\theta=0.4$, as illustrated in Fig. 4, the true function actually does not have a maximum value at $\theta=0.4$. In contrast, since a function that substantially agrees with the true function is formed by an RGP, using the function formed by an RGP makes it possible to determine that the value of a $\theta$ at which the evaluation value reaches a maximum is 2.0.

As above, in a case where functions are formed in accordance with the same control result data, using a GP does not enable the determination of a $\theta$ at which the evaluation value reaches a maximum, but using an RGP can enable the determination of the $\theta$ at which the evaluation value reached a maximum. This is because a Student's t-distribution is used as a likelihood function in an RGP, as will be described later, and it is therefore possible to treat, as an outlier, control result data whose degree of reliability is low so that the degree of contribution of the control result data is reduced.

(Regarding expressions to be used in calculating and updating predictive distribution)

As with Embodiment 1, in a case where the control result data 201 contains N control variables, these control variables are expressed as follows.

$$\Theta = \{\theta_n\}_{n=1}^{N}$$

The control variables are expressed by this expression.

The evaluation values of the control variables are expressed as follow:

$$\mathbf{Y} = \{y_n\}_{n=1}^{N}$$

The evaluation values are expressed by this expression.

Further, a function between input data and output data is expressed as follows.

$$\mathbf{f} = \{f(\theta_n)\}_{n=1}^{N}$$

Here, a prior distribution of the above function is set as below.

$$\mathbf{f} = \mathcal{N}(\mathbf{f} \mid \mathbf{0}, \mathbf{K}_{\Theta}) \tag{6}$$

In Embodiment 2, in order for the regression of an evaluation function to be performed with stability even when there is an outlier, a distribution having better outlier robustness is applied instead of the Gaussian distribution, as the likelihood function in a Gaussian process regression. For example, a Student's t-distribution may be used as the likelihood function. In this case, the likelihood function is expressed by Expression (7) below. Note that in Expression (7), a and b are parameters of the likelihood function, and $\Gamma$ represents a gamma function.

$$
\begin{aligned}
p(y_n \mid f_n) &= \mathrm{St}(y_n \mid f_n, a, b) \\
&= \frac{b^a}{\Gamma(a)\sqrt{2\pi}} \left[ b + \frac{(y_n - f_n)^2}{2} \right]^{-a-1/2} \Gamma(a + 1/2)
\end{aligned}
\tag{7}
$$

Here, a Gaussian distribution is not a conjugate prior distribution of a Student's t-distribution. It is therefore impossible to analytically calculate a posterior distribution. Accordingly, an analytical solution to the posterior distribution is determined on an approximate basis. For example, a variational Bayesian method can be used for determining an analytical solution to the posterior distribution on an approximate basis, as will be described below.

First, a Student's t-distribution serving as the likelihood function is expressed in a scale-mixture representation, by using a Gaussian distribution and a gamma distribution that are as follows.

$$p(y_n \mid f_n) = \int p(y_n \mid f_n, \tau_n) p(\tau_n) \mathrm{d}\tau_n \tag{8}$$

$$p(y_n \mid f_n, \tau_n) = \mathcal{N}(y_n \mid f_n, \tau_n^{-1}) \tag{9}$$

$$p(\tau_n) = \mathrm{Gam}(\tau_n \mid a, b) \tag{10}$$

This makes it possible to regard the likelihood function as a Gaussian distribution having a variance the reciprocal of which has a prior distribution which is a gamma distribution. Note that $\tau_n$ in Expressions (8) to (10) is the reciprocal of the variance of the Gaussian distribution of the n-th control result data 201, and $\tau_n$ represents the degree of reliability of the n-th control result data 201.

The predictive distribution calculating section 301 determines, through variational inference, an analytical solution to the posterior distribution of this model on an approximate basis. Specifically, the predictive distribution calculating section 301 determines variational distributions that maximize the lower bound of log marginal likelihood. These variational distributions approximate the posterior distribution. The predictive distribution calculating section 301 can therefore determine the posterior distribution on an approximate basis.

$$\log p(\mathbf{Y}) = \log \int p(\mathbf{Y} \mid \mathbf{f}, \mathbf{T}) p(\mathbf{T}) p(\mathbf{f}) \mathrm{d}\mathbf{f}\mathrm{d}\mathbf{T} \tag{11}$$

In this expression,

$$p(\mathbf{Y} \mid \mathbf{f}, \mathbf{T}) = \prod_{n=1}^{N} p(y_n \mid f_n, \tau_n), \quad \mathbf{T} = \text{diag}\{\tau_n\}_{n=1}^{N}$$

.

When it is assumed that the distributions of f and T are independent from each other, and a variational distribution q(f) and

$$q(\mathbf{T}) = \prod_{n=1}^{N} q(\tau_n)$$

are introduced, the predictive distribution calculating section 301 can determine a lower bound Fv by using Expression (12) below.

$$\log p(\mathbf{Y}) \geq \int q(\mathbf{f}) q(\mathbf{T}) \log \frac{p(\mathbf{Y} \mid \mathbf{f}, \mathbf{T}) p(\mathbf{T}) p(\mathbf{f})}{q(\mathbf{f}) q(\mathbf{T})} \mathrm{d}\mathbf{f}\mathrm{d}\mathbf{T} \tag{12}$$

$$= Fv$$

The predictive distribution calculating section 301 then determines the variational distributions that maximize the lower bound of the marginal likelihood by using Expression (12) above. As described above, these variational distributions approximate the posterior distribution.

The update rules to be applied to the variational distributions q(f) and $q(\tau_n)$ can be analytically determined as follows. As described above, $\tau_n$ indicates the degree of reliability of the n-th control result data 201. Accordingly, by determining a predictive distribution (mean and variance) of the evaluation function after deriving $q(\tau_n)$ that maximizes the lower bound Fv, i.e., a posterior distribution of $\tau_n$, the predictive distribution calculating section 301 can calculate a predictive distribution based on the degree of reliability. In other words, because the posterior distribution of $\tau_n$ that indicates the degree of reliability of the control result data 201 acts as the weight to be put on this control result data 201 in calculating a predictive distribution, it is possible to reduce the degree of contribution, to the calculation of the predictive distribution, of the control result data 201 that is lower in the degree of reliability. This makes it possible to eliminate or reduce the influence, on the predictive distribution, of the control result data 201 that is lower in the degree of reliability.

$$q(\mathbf{f}) = \mathcal{N}(\mathbf{f} \mid \mu_\mathbf{f}, \Sigma_\mathbf{f}) \tag{13}$$

$$\mu_\mathbf{f} = \Sigma_\mathbf{f} \hat{\mathbf{T}} \mathbf{Y} \tag{14}$$

$$\Sigma_\mathbf{f} = (\mathbf{K}_\mathbf{X}^{-1} + \hat{\mathbf{T}})^{-1} \tag{15}$$

$$\hat{\mathbf{T}} = \text{diag}(a_n/b_n) \tag{16}$$

$$q(\tau_n) = \text{Gam}(\tau_n \mid a_n, b_n) \tag{17}$$

$$a_n = a + \frac{1}{2} \tag{18}$$

$$b_n = b + \frac{1}{2}\left((y_n - [\mu_\mathbf{f}]_n)^2 - [\Sigma_\mathbf{f}]_{nn}\right) \tag{19}$$

The predictive distribution calculating section 301 uses the approximation of the posterior distribution determined by using the above expressions to determine a mean function and a variance function of the prediction of an evaluation function corresponding to any input $\theta_*$. Specifically, the predictive distribution calculating section 301 calculates a mean function and a variance function by using Expressions (20) and (21) below.

$$\mu(\theta_*) = \mathbf{k}_{\Theta,*}^T \mathbf{K}_\Theta^{-1} \mu_{\mathbf{f}} \tag{20}$$

$$\sigma(\theta_*) = \mathbf{k}_* - \mathbf{k}_{\Theta,*}^T (\mathbf{K}_\Theta + \hat{\mathbf{T}}^{-1})^{-1} \mathbf{k}_{\Theta,*} \tag{21}$$

The control variable searching section 103 then uses the above mean function and variance function to search for a point at which an acquisition function reaches a maximum, i.e., a candidate for an optimum control variable. For example, in a case of applying an UCB policy, the control variable searching section 103 calculates an acquisition function by using Expression (5), as in Embodiment 1, to search for this point at which the acquisition function reaches a maximum.

(Use of control result data of similar task)

As above, the task in Embodiment 2 is an action or work that the crane 5 is caused to perform. Different tasks have different optimum control variables. However, in a case where one task is different from but similar to another task (hereinafter referred to as similar task), the predictive distributions of the evaluation functions of the tasks can be similar to one another. In that case, the control result data of the similar task can be used. The following description will discuss a method for calculating or updating a predictive distribution by using the control result data of another task.
In a case of using the control result data of another task, the predictive distribution calculating section 301 calculates or updates a predictive distribution by using, in the calculation and update of the predictive distribution regarding one task, the degree of contribution based on the degree of similarity between the one task and another task, as the degree of contribution of the control result data of the other task in the calculation of a predictive distribution. Note that another task described above includes the similar task. Alternatively, another task described above may include a non-similar task.
In this configuration, the calculation and update of a predictive distribution are performed by using the control result data of another task. It is therefore possible to determine a reasonable control variable by performing an update a reduced number of times, in comparison with a case of only using the control result data of one task. Further, the control result data of another task is reflected in the calculation of the predictive distribution with the degree of contribution based on the degree of similarity to one task. This eliminates the inconvenience of choosing a similar task from among a plurality of tasks.
The following description will discuss in detail a method for using the control result data of another task. In a case of using the control result data of another task, the predictive distribution calculating section 301 uses control variables having been searched for so far

$$\Theta = \{\theta_n\}_{n=1}^N$$

, evaluation values

$$\mathbf{Y} = \{y_n\}_{n=1}^N$$

, and task labels corresponding to data points

$$\mathbf{t} = \{t_n\}_{n=1}^N$$

as a training data to perform the regression of an evaluation function of the similar task.

In a case of dealing with M tasks, the task labels are expressed as $t_n \in \{1,...,M\}$. The task labels of the control result data of the same task are assigned with the same real number value. That is, the task label indicates a task from which control result data $\Theta$ and Y is obtained when the task is carried out. In other words, the task label is a label for identifying the same task.

In order for the regression of an evaluation function to be performed for each task, the task label is treated as an input to a robust Gaussian process. Accordingly, the product of an input kernel k(θ,θ') and a task kernel $t_n$(t,t') is used as a kernel function, as shown in Expression (22) below.

$$k((\theta,t),(\theta',t')) \ = \ k_t(t,t') k_\theta(\theta,\theta') \qquad (22)$$

The task kernel is a function that indicates the degree of similarity between tasks, whereas the task label $t_n$, which is an input, is a label for identifying the same task. Therefore, the degree of similarity between tasks cannot be calculated from the values of the task labels $t_n$. Further, since the number of tasks is M, the output from the task kernel is an M×M-element pattern. Accordingly, the task kernel is expressed by using a square matrix Kt of order M, and the values of the elements indicated by the task labels inputted to the task kernel are used as outputs of the task kernel.

$$k_t(t,t') \ = \ [K_t]_{t,t'} \qquad (23)$$

In addition, in order for the task kernel to be used as a kernel function, Kt needs to be a positive-definite matrix. To this end, the Cholesky decomposition is used for decomposing Kt into parts, by using a lower triangle matrix L, in the form of $K_t = LL^T$. This makes it possible to use the M(M+1)/2 elements of the lower triangle matrix L as a parameter $\alpha_t$ of the task kernel and optimize this parameter $\alpha_t$ within the framework of variational inference to learn the degree of similarity between tasks from the control result data. Note that leaning the degree of similarity task between tasks means updating a posterior distribution so that the degree of similarity between the tasks is reflected (so that the degree of contribution of the control result data of a similar task is larger than the degree of contribution of the control result data of a non-similar task).

The parameter $\alpha_t$ thereby optimized indicates the degree of contribution (which can be referred to as weight) of each of the pieces of control result data of another task. Therefore, by using the optimized parameter $\alpha_t$ to determine a predictive distribution of an evaluation function, the predictive distribution calculating section 301 can calculate a predictive distribution by using the degree of contribution based on the degree of similarity between another task and a target task, as the degree of contribution of the control result data of the other task. This applies to the update of the predictive distribution.

(Flow of processing)

The flow of processing whereby the information processing device 1B determines the control variable of the crane 5 will be described. Although this processing flow is mostly similar to the processing flow, illustrated in Fig. 3, performed by the information processing device 1A, there are differences regarding the operations in S2 and S8 and the operation in S3. The following description will mainly discuss these differences.

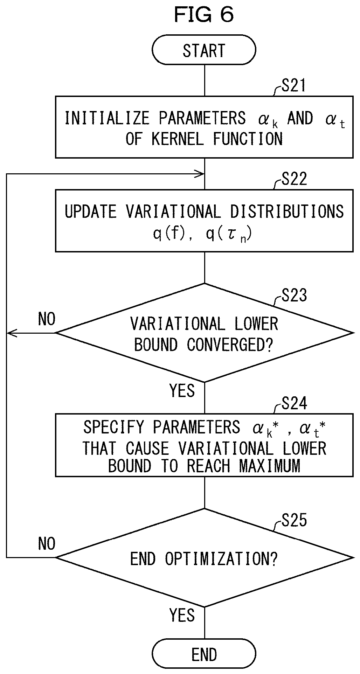

Fig. 6 is a flowchart of an example of processing for optimizing parameters of a kernel function. The processing of Fig. 6 is processing performed after the operation similar to that of S1 of Fig. 3, i.e., after the initial data setting performed by the data retrieving section 101, and corresponds to the operation in S2 of Fig. 3. Further, the information processing device 1B performs the processing of Fig. 6 instead of the operation in S8 of Fig. 3.

In S21, the predictive distribution calculating section 301 initializes parameters of a kernel function. Parameters of the kernel function that are to be initialized are two parameters, $\alpha_k$ and $\alpha_t$. Subsequently, in S22, the predictive distribution calculating section 301 updates the variational distributions q(f) and q($\tau_n$). The update rules to be applied to the variational distributions q(f) and q($\tau_n$) are the same as Expressions (13) to (19) above.

In S23, the predictive distribution calculating section 301 judges whether a variational lower bound has converged. The variational distributions q(f) and q($\tau_n$) that lead to the convergence of the variational lower bound are optimized variational distributions. The convergence condition may be set as appropriate. For example, when a difference between Fvs calculated before and after the update of q(f) and q($\tau_n$) is smaller than a predetermined value (e.g., 0.1), it may be judged that the variational lower bound has converged.

If it is judged in S23 that the variational lower bound has converged ("YES" in S23), then the processing proceeds to S24. On the other hand, if it is judged that the variational lower bound has not converged ("NO" in S23), then the processing returns to S22, and the variational distributions are updated again.

In S24, the predictive distribution calculating section 301 specifies the parameters $\alpha_k{}^*$ and $\alpha_t{}^*$ of the kernel function that cause the variational lower bound to reach a maximum. Expression (12) described above is used in this computation. The distributions q(f), q(T), and p(f) in Expression (12) contain a matrix K determined by using the kernel function. Accordingly, Fv can be treated as a function containing $\alpha_k$ and $\alpha_t$ as parameters. As a result, for example, any non-linear optimization approach can be used for the optimization. An example of the non-linear optimization approach is a gradient method.

In S25, the predictive distribution calculating section 301 judges whether to end the optimization. The end-of-optimization condition may be set as appropriate. For example, when a difference between Fvs calculated before and after the operations in S22 to S25 is smaller than a predetermined value (e.g., 0.1), it may be judged that the optimization should be ended.

If it is judged that the optimization should be ended in S25 ("YES" in S25), then the processing of Fig. 6 ends. After that, operations similar to those in and after S3 of the processing of Fig. 3 are performed. On the other hand, if it is judged that the optimization should not be ended ("NO" in S25), then the processing returns to S22, and the variational distributions are updated again.

As above, in the processing of Fig. 6, the calculation of variational distributions that maximize a variational lower bound and the optimization of the parameters of a kernel function are alternated. This enables determination of variational distributions that approximate the posterior distribution. Further, in the processing of Fig. 6, in addition to the optimization of the parameter $\alpha_k$ of the kernel function, the parameter $\alpha_t$ of the kernel function is optimized as well. This makes it possible to learn the degree of similarity between tasks.

The variational lower bound Fv is considered to be a result of calculating, on an approximate basis, whether the multi-task robust Gaussian process can satisfactorily express the control result data 201. Accordingly, by determining the parameter $\alpha_t$ that maximizes the variational lower bound Fv, it is possible to determine the degree of similarity suitable for the control result data 201.

By repeating operations in S22 to S25, the parameter $\alpha_t$ is optimized such that the control result data 201 of a similar task is used and the degree of contribution of the control result data 201 of a non-similar task is low. In other words, by repeating the operations in S22 to S25, the control result data of another task is weighted according to the degree of similarity to a target task.

With the above operations, it is possible, in calculating a predictive distribution regarding one task, to reuse the control result data of another task in accordance with an appropriate consideration, with the degree of contribution based on the degree of similarity between the one and the other tasks. It is therefore possible to determine a reasonable control variable while reducing the number of pieces of control result data of the one task.

[Example]

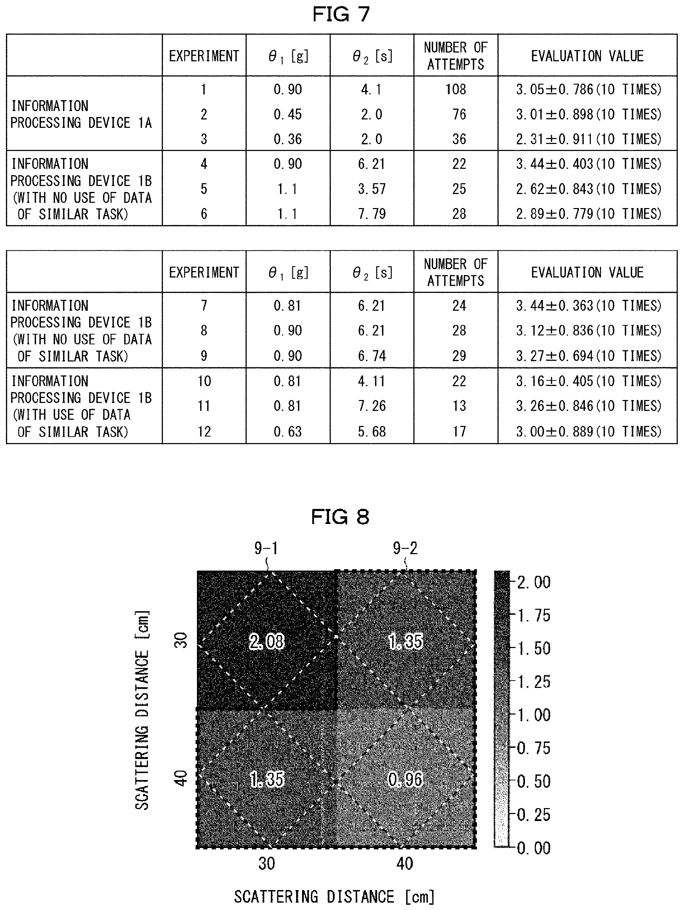

Experiments were carries out to verify the effects produced by the information processing device 1A and 1B. The results of the experiments will be discussed in accordance with Figs. 7 and 8. Fig. 7 is a chart showing the results of the experiments. Fig. 8 is a chart illustrating a task kernel obtained at the end of optimizations in Experiments 10 to 12.

Note that, in the experiments, a simulated crane that was compact enough to be used in a laboratory was used instead of the actual crane 5, and a mixture of shreds of paper cut by a shredder and rubber toy balls was used as simulated waste.

A task to be performed by a crane was such that the crane grasped and lifted waste, and then evenly scattered the waste while moving predetermined distances. Specifically, the crane was caused to carry out an action to, after the start of an opening action to open a bucket grasping the waste, start a closing action to close the bucket at the time when the weight of the waste that dropped from the bucket reached $\theta_1$ and start the opening action again at the time when time $\theta_2$ elapsed after the start of the closing action. The above $\theta_1$ and $\theta_2$ are the control variables.

In the evaluation of the control result, an ideal transition was defined as a constant-rate reduction in the weight of the waste being grasped by the bucket during an increase in the moving distance of the crane. An evaluation value was calculated in accordance with a difference between this ideal transition and an actual transition. Specifically, a root mean square (RMS) of a difference between sequence data w of actual grasped weight normalized with respect to the weight of the waste grasped by the crane and sequence data $w_I$ of ideal grasped weight was calculated, and an evaluation was carried out by using Expression (24) below.

$$\mathrm{E}(\theta) = 5 - 10 \times \mathrm{RMS}(\mathrm{w}(\theta) - \mathrm{w_I}) \qquad (24)$$

Like actual waste stored in a waste pit, the simulated waste is also heterogeneous, as described above. Therefore, $w(\theta)$ can greatly vary even for the same action parameter, and the evaluation value $E(\theta)$ is affected, accordingly.

The weight grasped first was set to 120 g to 300 g, and the moving distance was set to 40 cm. In a single experiment, the control variables $\theta_1$ and $\theta_2$ having been optimized were applied and a task was carried out ten times. The control results thereby obtained were evaluated by using Expression (24) above.

The experiment was carried out 12 times in total, namely Experiments 1 to 12. In Experiments 1 to 3 of these experiments, the control variables $\theta_1$ and $\theta_2$ were optimized by using the information processing device 1A. In Experiments 4 to 9, the control variables $\theta_1$ and $\theta_2$ were optimized by using the information processing device 1B. It should be noted that, in Experiments 4 to 9, data of a similar task was not used. In Experiments 10 to 12, the control variables $\theta_1$ and $\theta_2$ were optimized by using the information processing device 1B with the use of the data of the similar task. The similar task is a task in which the moving distance of the crane was set to 30 cm.

As shown in Fig. 7, although the control variables $\theta_1$ and $\theta_2$ having been optimized vary between Experiments 1 to 12, any of the evaluation values thereof is of a high level. It has therefore been confirmed that a reasonable optimization was performed.

A comparison between the results of Experiments 1 to 3 and the results of Experiments 4 to 6 shows that there is a difference in the number of attempts required for optimization. Specifically, it has been shown that it is possible to calculate a reasonable control variable with a smaller number of attempts in the optimization by the information processing device 1B than in the optimization by the information processing device 1A. Note that the number of attempts required for optimization is the number of times a new control result is retrieved until an optimum control variable is determined (until a judgement of "YES" is made in S5 of Fig. 3) by using a control variable determined via the acquisition function to put the crane into action.

Further, a comparison between the results of Experiments 7 to 9 and the results of Experiments 10 to 12 also shows that there is a difference in the number of attempts required for optimization. Specifically, it has been shown that using the control result data of a similar task makes it possible to calculate a reasonable control variable with an even smaller number of attempts.

Fig. 8 is a chart illustrating a task kernel obtained at the end of optimizations in Experiments 10 to 12. In Fig. 8, the vertical and horizontal axes indicate task labels, and a numerical value indicates the degree of similarity between corresponding tasks. As shown in Fig. 8, the value (1.35) of the off-diagonal elements 9-2 that indicates the degree of similarity (the degree of contribution in the calculation of a predictive distribution) between a task in which the moving distance is 40 cm and a task (similar task) in which the moving distance is 30 cm is higher than one (0.96) of the values of the diagonal elements 9-1. As is clear from this, the control result data of the similar task was used in the calculation of the predictive distribution.

Although not shown in the chart, a similar experiment was carried out under conditions where the moving distance of the crane in the above task was changed to 20 cm and tasks in which the respective moving distances of the crane are set to 30 cm and 40 cm are used as similar tasks. As a result, the control variables $\theta_1$ and $\theta_2$ were calculated with the same precision as in each result described above, with the number of attempts as small as ten. Also in a task kernel obtained at the end of optimization in this case, the value of the off-diagonal elements was greater, like the example of Fig. 8. It has therefore been shown that the control result data of the similar tasks were used.

In addition, an experiment of scattering waste in a waste pit by using the actual crane 5 was carried out. The result was similar to that of each example described above. It has been shown that the information processing device 1A enables the calculation of a reasonable control variable and the information processing device 1B enables the calculation of a reasonable control variable with a smaller number of attempts.

Additionally, in the experiment in which the actual crane 5 was used, the task was also carried out by an operator. The result of this was evaluated by using Expression (24). A t-test was performed on the evaluation value of the control result yielded by using a control variable optimized by the information processing device 1B and on the evaluation value of the control result of control performed by the operator. As a result, there were no significant differences. In other words, the level of the control performed by using the control variable optimized by the information processing device 1B was considered to be as high as that of the control performed by the operator.

[Software Implementation Example]

Control blocks of the information processing devices 1A and 1B (particularly, each section included in the control section 10A and the control section 10B) can be implemented by a logic circuit (hardware) provided in an integrated circuit (IC chip) or the like or can be implemented by software.

In the latter case, the information processing devices 1A and 1B include a computer that executes instructions of a program (control variable determination program) that is software realizing the foregoing functions. The computer, for example, includes one or more processors and a computer-readable storage medium storing the program. An object of the present invention can be achieved by the processor of the computer reading and executing the program stored in the storage medium. Examples of the processor encompass a central processing unit (CPU). Examples of the storage medium encompass a "non-transitory tangible medium" such as a read only memory (ROM), a tape, a disk, a card, a semiconductor memory, and a programmable logic circuit. The computer may further include a random access memory (RAM) or the like in which the program is loaded. Further, the program may be made available to the computer via any transmission medium (such as a communication network and a broadcast wave) which allows the program to be transmitted. Note that an aspect of the present invention can also be achieved in the form of a data signal in which the program is embodied via electronic transmission and which is embedded in a carrier wave.

[Variation]

The present invention is not limited to the embodiments, but can be altered by a skilled person in the art within the scope of the claims.

For example, in the information processing device 1A of Embodiment 1, an optimization in which the control result data of a similar task is used can be carried out. In this case, the kernel function represented by Expression (22) may be used and an optimization of the parameter $\alpha_t$ of the kernel function may be additionally optimized in S2 and S8 of Fig. 3.

The entity performing each processing described in each embodiment above can be changed as appropriate. The control variable calculation method illustrated in Fig. 3 may be performed by a plurality of information processing devices. Correspondingly, the control variable determination method illustrated in Fig. 6 may be performed by a plurality of information processing devices.

Although described in each embodiment above is an example of the optimization of a control variable in a task in which waste is scattered and then mixed, the task only needs to be performed by a crane that transports the waste, and the details thereof are not particularly limited. For example, a control variable of a task such as a task of causing a crane to perform the action of grasping waste, a task of causing the crane to perform the action of lifting the grasped waste, or a task of causing the crane to perform the action of dropping the lifted waste can also be optimized.

Reference Signs List

1A: Information processing device
102: Predictive distribution calculating section
103: Control variable searching section
104: Control variable determining section
201: Control result data
1B: Information processing device
301: Predictive distribution calculating section
3: Control device
5: Crane
9: Control system

**Claims**

1. An information processing device comprising:

   a predictive distribution calculating section (102);
   a control variable searching section (103); and
   a control variable determining section (104),
   the predictive distribution calculating section (102) being configured to calculate a predictive distribution of a function by using control result data, the control result data containing a control variable of a crane (5) adapted to transport waste and a control result of control of the crane (5) by using the control variable, the control variable and the control result being brought into correspondence with each other, the function indicating a relationship between the control variable and the control result, the predictive distribution being represented by using a mean and a variance of the function which are predicted from the control result data,
   the control variable searching section (103) being configured to search for a candidate control variable in accordance with the predictive distribution, the candidate control variable being a candidate for an optimum value of the control variable,
   the predictive distribution calculating section (102) being also configured to update the predictive distribution by using the candidate control variable detected by the control variable searching section (103) and a control result of control of the crane (5) by using the candidate control variable,
   the control variable determining section (104) being configured to determine the optimum value of the control variable by using a function formed in accordance with a mean and a variance of the predictive distribution to which the update has been made.

2. The information processing device according to claim 1, wherein
   the predictive distribution calculating section (102) is configured to calculate or update the predictive distribution by using the degree of contribution based on the degree of reliability of each of pieces of control result data, the pieces of control result data each being the control result data, as the degree of contribution of that control result data in the calculation of the predictive distribution.

3. The information processing device according to claim 1 or 2, wherein
the predictive distribution calculating section (102) is configured to calculate or update the predictive distribution by using the degree of contribution based on the degree of similarity between a task that the crane (5) is caused to perform by using the control variable and another task different from the task, as the degree of contribution of control result data of the other task in the calculation of the predictive distribution.

4. A control system comprising:

the information processing device (1A, 1B) according to any one of claims 1 to 3;
a control device (3) configured to control the crane (5) by using the control variable; and
the crane (5).

5. A control variable determination method to be performed by one or more information processing devices (1A, 1B), the control variable determination method comprising:

a predictive distribution calculating step of calculating a predictive distribution of a function by using control result data, the control result data containing a control variable of a crane (5) adapted to transport waste and a control result of control of the crane (5) by using the control variable, the control variable and the control result being brought into correspondence with each other, the function indicating a relationship between the control variable and the control result, the predictive distribution being represented by using a mean and a variance of the function which are predicted from the control result data;
a control variable searching step of searching for a candidate control variable in accordance with the predictive distribution, the candidate control variable being a candidate for an optimum value of the control variable;
an updating step of updating the predictive distribution by using the candidate control variable detected in the control variable searching step and a control result of control of the crane by using the candidate control variable; and
a control variable determining step of determining the optimum value of the control variable by using a function formed in accordance with a mean and a variance of the predictive distribution to which the update has been made.

6. A control variable determination program for causing a computer to function as the information processing device (1A, 1B) according to claim 1, the control variable determination program being for causing a computer to function as the predictive distribution calculating section (102), the control variable searching section (103), and the control variable determining section (104).

**Patentansprüche**

1. Informationsverarbeitungsvorrichtung, die umfasst:

einen Teilabschnitt (102) zum Berechnen prädiktiver Verteilung;
einen Teilabschnitt (103) zum Suchen einer Steuervariablen; sowie
einen Teilabschnitt (104) zum Bestimmen einer Steuervariablen;
wobei der Teilabschnitt (102) zum Berechnen prädiktiver Verteilung so ausgeführt ist, dass er eine prädiktive Verteilung einer Funktion unter Verwendung von Steuerergebnis-Daten berechnet, wobei die Steuerergebnis-Daten eine Steuervariable eines Krans (5), der zum Transportieren von Abfall eingerichtet ist, sowie ein Steuerergebnis von Steuerung des Krans (5) unter Verwendung der Steuervariablen enthält, wobei die Steuervariable und das Steuerergebnis in Korrespondenz miteinander gebracht werden, die Funktion eine Beziehung zwischen der Steuervariablen und dem Steuerergebnis anzeigt, und die prädiktive Verteilung unter Verwendung eines Mittelwertes sowie einer Varianz der Funktion dargestellt wird, die anhand der Steuerergebnis-Daten vorhergesagt werden,
der Teilabschnitt (103) zum Suchen einer Steuervariablen so ausgeführt ist, dass er nach einer Kandidaten-Steuervariablen entsprechend der prädiktiven Verteilung sucht, wobei die Kandidaten-Steuervariable ein Kandidat für einen Optimalwert der Steuervariablen ist,

der Teilabschnitt (102) zum Berechnen prädiktiver Verteilung darüber hinaus so ausgeführt ist, dass er die prädiktive Verteilung unter Verwendung der durch den Teilabschnitt (103) zum Suchen einer Steuervariablen erfassten Kandidaten-Steuervariablen und eines Steuerergebnisses von Steuerung des Krans (5) unter Verwendung der Kandidaten-Steuervariablen aktualisiert,

der Teilabschnitt (104) zum Bestimmen einer Steuervariablen so ausgeführt ist, dass er den Optimalwert der Steuervariablen unter Verwendung einer Funktion bestimmt, die entsprechend einem Mittelwert und einer Varianz der prädiktiven Verteilung erstellt wird, an der die Aktualisierung vorgenommen worden ist.

2. Informationsverarbeitungsvorrichtung nach Anspruch 1, wobei

der Teilabschnitt (102) zum Berechnen prädiktiver Verteilung so ausgeführt ist, dass er die prädiktive Verteilung unter Verwendung des Grades an Beitrag auf Basis des Grades an Zuverlässigkeit jedes von Elementen von Steuerergebnis-Daten als dem Grad an Beitrag dieser Steuerergebnis-Daten bei der Berechnung der prädiktiven Verteilung berechnet oder aktualisiert, wobei die Elemente von Steuerergebnis-Daten jeweils die Steuerergebnis-Daten sind.

3. Informationsverarbeitungsvorrichtung nach Anspruch 1 oder 2, wobei der Teilabschnitt (102) zum Berechnen prädiktiver Verteilung so ausgeführt ist, dass er die prädiktive Verteilung unter Verwendung des Grades an Beitrag auf Basis des Grades an Ähnlichkeit zwischen einer Aufgabe, zu deren Durchführung der Kran (5) unter Verwendung der Steuervariablen veranlasst wird, und einer anderen, sich von der Aufgabe unterscheidenden Aufgabe als dem Grad an Beitrag von Steuerergebnis-Daten der anderen Aufgabe bei der Berechnung der prädiktiven Verteilung berechnet oder aktualisiert.

4. Steuerungssystem, das umfasst:

die Informationsverarbeitungsvorrichtung (1A, 1B) nach einem der Ansprüche 1 bis 3;
eine Steuervorrichtung (3), die so ausgeführt ist, dass sie den Kran (5) unter Verwendung der Steuervariablen steuert; sowie
den Kran (5).

5. Verfahren für Bestimmung einer Steuervariablen, durchzuführen von einer oder mehreren Informationsverarbeitungsvorrichtung/en (1A, 1B), wobei das Verfahren für Bestimmung einer Steuervariablen umfasst:

einen Schritt zum Berechnen prädiktiver Verteilung, in dem eine prädiktive Verteilung unter Verwendung von Steuerergebnis-Daten berechnet wird, wobei die Steuerergebnis-Daten eine Steuervariable eines Krans (5), der zum Transportieren von Abfall eingerichtet ist, sowie ein Steuerergebnis von Steuerung des Krans (5) unter Verwendung der Steuervariablen enthält, wobei die Steuervariable und das Steuerergebnis in Korrespondenz miteinander gebracht werden, die Funktion eine Beziehung zwischen der Steuervariablen und dem Steuerergebnis anzeigt, und die prädiktive Verteilung unter Verwendung eines Mittelwertes sowie einer Varianz der Funktion dargestellt wird, die anhand der Steuerergebnis-Daten vorhergesagt werden,
einen Schritt zum Suchen einer Steuervariablen, in dem nach einer Kandidaten-Steuervariablen entsprechend der prädiktiven Verteilung gesucht wird, wobei die Kandidaten-Steuervariable ein Kandidat für einen Optimalwert der Steuervariablen ist,
einen Aktualisierungsschritt, in dem die prädiktive Verteilung unter Verwendung der in dem Schritt zum Suchen einer Steuervariablen erfassten Kandidaten-Steuervariablen und eines Steuerergebnisses von Steuerung des Krans unter Verwendung der Kandidaten-Steuervariablen aktualisiert wird; sowie
einen Schritt zum Bestimmen einer Steuervariablen, in dem der Optimalwert der Steuervariablen unter Verwendung einer Funktion bestimmt wird, die entsprechend einem Mittelwert und einer Varianz der prädiktiven Verteilung erstellt wird, an der die Aktualisierung vorgenommen worden ist.

6. Programm für Bestimmung einer Steuervariablen, mit dem ein Computer veranlasst wird, als die Informationsverarbeitungsvorrichtung (1A, 1B) nach Anspruch 1 zu arbeiten, wobei das Programm für Bestimmung einer Steuervariablen dazu dient, einen Computer zu veranlassen, als der Teilabschnitt (102) zum Berechnen prädiktiver Verteilung, der Teilabschnitt (103) zum Suchen einer Steuervariablen sowie als der Teilabschnitt (104) zum Bestimmen einer Steuervariablen zu arbeiten.

**Revendications**

1. Dispositif de traitement d'informations comprenant :

une section de calcul de distribution prédictive (102) ;

une section de recherche de variable de commande (103) ; et

une section de détermination de variable de commande (104),

la section de calcul de distribution prédictive (102) étant configurée pour calculer une distribution prédictive d'une fonction en utilisant des données de résultat de commande, les données de résultat de commande contenant une variable de commande d'une grue (5) adaptée pour transporter des déchets et un résultat de commande de la grue (5) en utilisant la variable de commande, la variable de commande et le résultat de commande étant mis en correspondance l'un avec l'autre, la fonction indiquant une relation entre la variable de commande et le résultat de commande, la distribution prédictive étant représentée en utilisant une moyenne et une variance de la fonction qui sont prédites à partir des données de résultat de commande,

la section de recherche de variable de commande (103) étant configurée pour rechercher une variable de commande candidate conformément à la distribution prédictive, la variable de commande candidate étant une candidate pour une valeur optimale de la variable de commande,

la section de calcul de distribution prédictive (102) étant également configurée pour mettre à jour la distribution prédictive en utilisant la variable de commande candidate détectée par la section de recherche de variable de commande (103) et un résultat de commande de la grue (5) en utilisant la variable de commande candidate,

la section de détermination de variable de commande (104) étant configurée pour déterminer la valeur optimale de la variable de commande en utilisant une fonction formée conformément à une moyenne et à une variance de la distribution prédictive qui a été mise à jour.

**2.** Dispositif de traitement d'informations selon la revendication 1, dans lequel

la section de calcul de distribution prédictive (102) est configurée pour calculer ou mettre à jour la distribution prédictive en utilisant le degré de contribution basé sur le degré de fiabilité de chacun des éléments de données de résultat de commande, les éléments de données de résultat de commande étant chacun les données de résultat de commande, comme étant le degré de contribution de ces données de résultat de commande dans le calcul de la distribution prédictive.

**3.** Dispositif de traitement d'informations selon la revendication 1 ou 2, dans lequel

la section de calcul de distribution prédictive (102) est configurée pour calculer ou mettre à jour la distribution prédictive en utilisant le degré de contribution basé sur le degré de similitude entre une première tâche que la grue (5) est amenée à effectuer en utilisant la variable de commande et une autre tâche différente de la première tâche, comme étant le degré de contribution des données de résultat de commande de l'autre tâche dans le calcul de la distribution prédictive.

**4.** Système de commande comprenant :

le dispositif de traitement d'informations (1A, 1B) selon l'une quelconque des revendications 1 à 3 ;

un dispositif de commande (3) configuré pour commander la grue (5) en utilisant la variable de commande ; et

la grue (5).

**5.** Procédé de détermination de variable de commande à effectuer par un ou plusieurs dispositifs de traitement d'informations (1A, 1B), le procédé de détermination de variable de commande comprenant :

une étape de calcul de distribution prédictive consistant à calculer une distribution prédictive d'une fonction en utilisant des données de résultat de commande, les données de résultat de commande contenant une variable de commande d'une grue (5) adaptée pour transporter des déchets et un résultat de commande de la grue (5) en utilisant la variable de commande, la variable de commande et le résultat de commande étant mis en correspondance l'un avec l'autre, la fonction indiquant une relation entre la variable de commande et le résultat de commande, la distribution prédictive étant représentée en utilisant une moyenne et une variance de la fonction qui sont prédites à partir des données de résultat de commande ;

une étape de recherche de variable de commande consistant à rechercher une variable de commande candidate conformément à la distribution prédictive, la variable de commande candidate étant une candidate pour une valeur optimale de la variable de commande ;

une étape de mise à jour consistant à mettre à jour la distribution prédictive en utilisant la variable de commande candidate détectée dans l'étape de recherche de variable de commande et un résultat de commande de la grue en utilisant la variable de commande candidate ; et

une étape de détermination de variable de commande consistant à déterminer la valeur optimale de la variable de commande en utilisant une fonction formée conformément à une moyenne et à une variance de la distribution prédictive qui a été mise à jour.

6. Programme de détermination de variable de commande destiné à faire fonctionner un ordinateur comme dispositif de traitement d'informations (1A, 1B) selon la revendication 1, le programme de détermination de variable de commande étant destiné à faire fonctionner un ordinateur comme section de calcul de distribution prédictive (102), section de recherche de variable de commande (103) et section de détermination de variable de commande (104).

## FIG 1

```
                                                              ┌─ 1A
┌─────────────────────────────────────────────────────────────┐
│              INFORMATION PROCESSING DEVICE                    │
│                                                               │
│    ┌─ 10A                          ┌─ 20                       │
│  ┌──────────────────────┐      ┌──────────────────────┐       │
│  │  CONTROL SECTION      │      │  STORAGE SECTION      │       │
│  │                       │      │          ┌─ 201       │       │
│  │    ┌─ 101             │      │  ┌─────────────────┐  │       │
│  │  ┌──────────────┐     │      │  │ CONTROL RESULT  │  │       │
│  │  │DATA RETRIEVING│◄───┼──────┼─►│     DATA        │  │       │
│  │  │   SECTION     │◄─┐ │      │  └─────────────────┘  │       │
│  │  └──────────────┘  │ │      └──────────────────────┘       │
│  │         │          │ │                                      │
│  │         ▼  ┌─ 102   │ │               ┌─ 30                  │
│  │  ┌──────────────┐  │ │      ┌──────────────────────┐        │
│  │  │ PREDICTIVE   │  │ │      │                       │        │
│  │  │ DISTRIBUTION │  └─┼──────┤    INPUT SECTION      │        │
│  │  │ CALCULATING  │    │      │                       │        │
│  │  │   SECTION    │    │      └──────────────────────┘        │
│  │  └──────────────┘    │                                      │
│  │         │  ┌─ 103     │                                      │
│  │         ▼            │                                      │
│  │  ┌──────────────┐    │                                      │
│  │  │  CONTROL     │    │                                      │
│  │  │  VARIABLE    │────┼──────────┐                           │
│  │  │  SEARCHING   │    │          │                           │
│  │  │   SECTION    │    │          │                           │
│  │  └──────────────┘    │          │       ┌─ 40               │
│  │         │  ┌─ 104     │          ▼                           │
│  │         ▼            │      ┌──────────────────────┐        │
│  │  ┌──────────────┐    │      │                       │        │
│  │  │  CONTROL     │    │      │    OUTPUT SECTION     │        │
│  │  │  VARIABLE    │────┼─────►│                       │        │
│  │  │ DETERMINING  │    │      └──────────────────────┘        │
│  │  │   SECTION    │    │                                      │
│  │  └──────────────┘    │                                      │
│  └──────────────────────┘                                      │
└───────────────────────────────────────────────────────────────┘
```

## FIG 2

```
                          ┌─ 3                      ┌─ 9
                    ┌──────────────────┐           ↙
                    │  CONTROL DEVICE  │
                    └──────────────────┘
              ↗                        ↘
 CONTROL VARIABLE                        CONTROL
         ↗                                  ↘
   ┌─ 1A                                      ┌─ 5
┌──────────────┐                        ┌──────────────┐
│ INFORMATION  │                        │              │
│ PROCESSING   │◄───────────────────────│    CRANE     │
│   DEVICE     │   EVALUATION RESULT    │              │
└──────────────┘                        └──────────────┘
```

## FIG 3

```
                    START

                                      ┌S1
        ┌──────────────────────────────────────┐
        │         SET INITIAL DATA              │
        └──────────────────────────────────────┘

                                      ┌S2
        ┌──────────────────────────────────────┐
        │  OPTIMIZE PARAMETER OF KERNEL FUNCTION │
        └──────────────────────────────────────┘

                                      ┌S3
        ┌──────────────────────────────────────┐
        │  CALCULATE PREDICTIVE DISTRIBUTION OF  │
        │  EVALUATION FUNCTION FOR EVALUATING    │
        │  CONTROL RESULT OF CONTROL OVER CRANE  │
        └──────────────────────────────────────┘

                                      ┌S4
        ┌──────────────────────────────────────┐
        │   SEARCH FOR CONTROL VARIABLE θ*      │
        │   OF CRANE THAT CAUSES ACQUISITION    │
        │   FUNCTION TO REACH MAXIMUM           │
        └──────────────────────────────────────┘
```

$\theta *$

- S5 — IS $\theta *$ OPTIMUM VALUE? — YES
- NO

- S6 — RETRIEVE EVALUATION RESULT FOR $\theta *$
- S7 — ADD $\theta *$ AND EVALUATION RESULT TO CONTROL RESULT DATA
- S8 — OPTIMIZE PARAMETER OF KERNEL FUNCTION
- S9 — UPDATE PREDICTIVE DISTRIBUTION OF EVALUATION FUNCTION

- S10 — DETERMINE THAT CONTROL VARIABLE OF CRANE IS $\theta *$

END

## FIG 4

## FIG 5

INFORMATION PROCESSING DEVICE ⌐1B

CONTROL SECTION ⌐10B

DATA RETRIEVING SECTION ⌐101

PREDICTIVE DISTRIBUTION CALCULATING SECTION ⌐301

CONTROL VARIABLE SEARCHING SECTION ⌐103

CONTROL VARIABLE DETERMINING SECTION ⌐104

STORAGE SECTION ⌐20

CONTROL RESULT DATA ⌐201

INPUT SECTION ⌐30

OUTPUT SECTION ⌐40

## FIG 6

```
        ( START )
             |
             |                    S21
   ┌─────────────────────────────┐
   │ INITIALIZE PARAMETERS α_k AND α_t │
   │      OF KERNEL FUNCTION       │
   └─────────────────────────────┘
             |
             |                    S22
   ┌─────────────────────────────┐
   │ UPDATE VARIATIONAL DISTRIBUTIONS │
   │        q(f), q(τ_n)           │
   └─────────────────────────────┘
             |
             |                    S23
        ◇ VARIATIONAL LOWER        NO
          BOUND CONVERGED? ──────────►
             | YES
             |                    S24
   ┌─────────────────────────────┐
   │  SPECIFY PARAMETERS α_k*, α_t* │
   │ THAT CAUSE VARIATIONAL LOWER  │
   │   BOUND TO REACH MAXIMUM      │
   └─────────────────────────────┘
             |
             |                    S25
        ◇ END OPTIMIZATION?    NO
             |  YES
         ( END )
```

Process flow labels:
- S21: INITIALIZE PARAMETERS $\alpha_k$ AND $\alpha_t$ OF KERNEL FUNCTION
- S22: UPDATE VARIATIONAL DISTRIBUTIONS $q(f)$, $q(\tau_n)$
- S23: VARIATIONAL LOWER BOUND CONVERGED? — NO / YES
- S24: SPECIFY PARAMETERS $\alpha_k{}^*$, $\alpha_t{}^*$ THAT CAUSE VARIATIONAL LOWER BOUND TO REACH MAXIMUM
- S25: END OPTIMIZATION? — NO / YES

## FIG 7

| | EXPERIMENT | $\theta_1$ [g] | $\theta_2$ [s] | NUMBER OF ATTEMPTS | EVALUATION VALUE |
|---|---|---|---|---|---|
| INFORMATION PROCESSING DEVICE 1A | 1 | 0.90 | 4.1 | 108 | 3.05±0.786(10 TIMES) |
| | 2 | 0.45 | 2.0 | 76 | 3.01±0.898(10 TIMES) |
| | 3 | 0.36 | 2.0 | 36 | 2.31±0.911(10 TIMES) |
| INFORMATION PROCESSING DEVICE 1B (WITH NO USE OF DATA OF SIMILAR TASK) | 4 | 0.90 | 6.21 | 22 | 3.44±0.403(10 TIMES) |
| | 5 | 1.1 | 3.57 | 25 | 2.62±0.843(10 TIMES) |
| | 6 | 1.1 | 7.79 | 28 | 2.89±0.779(10 TIMES) |

| | EXPERIMENT | $\theta_1$ [g] | $\theta_2$ [s] | NUMBER OF ATTEMPTS | EVALUATION VALUE |
|---|---|---|---|---|---|
| INFORMATION PROCESSING DEVICE 1B (WITH NO USE OF DATA OF SIMILAR TASK) | 7 | 0.81 | 6.21 | 24 | 3.44±0.363(10 TIMES) |
| | 8 | 0.90 | 6.21 | 28 | 3.12±0.836(10 TIMES) |
| | 9 | 0.90 | 6.74 | 29 | 3.27±0.694(10 TIMES) |
| INFORMATION PROCESSING DEVICE 1B (WITH USE OF DATA OF SIMILAR TASK) | 10 | 0.81 | 4.11 | 22 | 3.16±0.405(10 TIMES) |
| | 11 | 0.81 | 7.26 | 13 | 3.26±0.846(10 TIMES) |
| | 12 | 0.63 | 5.68 | 17 | 3.00±0.889(10 TIMES) |

## FIG 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0592891 A
- US 6625500 B1
- US 2017205809 A1
- EP 3470735 A1
- JP 2010275064 A